# FASCICULE DE BREVET EUROPEEN

(11) **EP 2 389 783 B1**
(45) Date de publication et mention de la délivrance du brevet: **23.10.2013**
(21) Numéro de dépôt: 10707322.3
(22) Date de dépôt: 19.01.2010
(51) Int. Cl.: H04W 88/08, H04W 52/02

(54) **PROCEDE DE GESTION DU FONCTIONNEMENT D'UN POINT D'ACCES RADIO D'UNE INFRASTRUCTURE DE RESEAU D'ACCES D'UN RESEAU DE RADIOCOMMUNICATION**
VERFAHREN ZUR VERWALTUNG DES BETRIEBS EINES DRAHTLOSEN ZUGANGSPUNKTES EINER ZUGANGSNETZINFRASTRUKTUR EINES FUNKKOMMUNIKATIONSNETZES
METHOD FOR MANAGING THE OPERATION OF A WIRELESS ACCESS POINT OF AN ACCESS NETWORK INFRASTRUCTURE OF A RADIO COMMUNICATION NETWORK

(30) Priorité: 20.01.2009 FR 0950329
(43) Date de publication de la demande: 30.11.2011
(73) Titulaire: Alcatel Lucent, 75007 Paris (FR)
(72) Inventeur: CONTE, Alberto, F-91620 Nozay (FR); LECLERC, Brice, F-91620 Nozay (FR)
(74) Mandataire: Lück, Stephan
(86) Numéro de dépôt international: PCT/FR2010/050081
(87) Numéro de publication internationale: WO 2010/084282

(56) Documents cités:
- WO-A1-2004/075583
- WO-A2-2005/062798
- US-A1- 2007 270 152
- US-A1- 2008 232 286

## Description

La présente invention se rapporte à la gestion du fonctionnement d'un point d'accès d'une infrastructure de réseau d'accès d'un réseau de radiocommunication. Elle se rapporte en particulier à la gestion d'un mode de fonctionnement de type veille d'un point d'accès d'un réseau de radiocommunication.

Les publications de demande de brevet US 2008/0232286 A1 et WO 2004/075583 A1 divulguent des systèmes pour réduire la consommation d'énergie dans un réseau de communication sans-fil.

La publication de demande de brevet WO 2005/062798 A2 décrit une station de base pico qui comprend des moyens pour contrôler les interférences entre des stations de base avoisinantes.

Le développement récent du concept d'accès large-bande dans un contexte résidentiel a entraîné l'émergence de nouvelles solutions conçues pour remplir ce besoin notamment dans le domaine de l'accès sans-fil. Un ensemble de solutions récentes, regroupées sous l'appellation commune « femto » ou « gateway résidentielle », offrent notamment à des usagers résidentiels l'accès à des transmissions sans-fil à haut-débit. La solution femto fournit typiquement une interface radio conforme à un standard de radiocommunication de troisième génération, ou équivalent, et s'insère au sein d'une infrastructure d'un réseau d'accès radio correspondant. Un exemple en est fourni par les points d'accès femto conformes au standard de troisième génération UMTS (« Universal Mobile Telecommunication System »), qui sont aptes à communiquer avec des équipements utilisateurs sur l'interface radio conformément aux spécifications de communication sur l'interface air pour les systèmes UMTS, et disposent d'une interface de communication avec un réseau d'accès radio de type UMTS.

Un point d'accès femto consiste typiquement en une station de base (ou un routeur de station de base (en anglais, « Base Station Router »)) de petite taille et faible puissance, capable d'émettre et de recevoir des signaux radio conformément aux spécifications d'interface radio d'un système de radiocommunication, par exemple cellulaire, auquel il est associé. Il permet ainsi d'étendre la couverture radio dudit système, en fournissant des moyens de couverture à l'intérieur des bâtiments (en anglais, « indoor coverage »), mais aussi une couverture radio à l'échelle résidentielle pour un accès large bande sans-fil résidentiel. L'appellation « femto » fait généralement référence à la petite taille de la cellule radio générée par ces points d'accès lorsqu'ils forment une partie d'un réseau de radiocommunication cellulaire, par comparaison avec la taille des cellules radio générées par les stations de base « classiques » d'un système de radiocommunication cellulaire. Le point d'accès femto est d'autre part connecté à une infrastructure de réseau d'accès radio du système de radiocommunication cellulaire auquel il est associé au moyen d'une interface de communication large bande, du type généralement de celle des interfaces disponibles en milieu résidentiel, comme par exemple une ligne ADSL ou une interface de réseau câblée.

Les points d'accès femto étant notamment destinés à l'usage résidentiel, ils n'échappent pas à la nécessité partagée avec l'ensemble des équipements électroniques, y compris de type grand public, de limiter la consommation en énergie. La définition d'un mode de fonctionnement de type veille, dans lequel un point d'accès consomme moins d'énergie qu'en fonctionnement normal, est donc souhaitable. Un tel mode se caractérise en outre par les principes qui gouvernent la gestion du passage du mode normal au mode veille, et inversement.

L'invention propose ainsi un procédé selon la revendication indépendante 1, un dispositif selon la revendication indépendante 10, un point d'accès radio de type résidentiel ou "femto" selon la revendication indépendante 12; un équipement CPE, " Customer Premises Equipment " en anglais selon la revendication indépendante 13, un programme d'ordinateur selon la revendication indépendante 14 et un support informatique selon la revendication indépendante 15. D'autres avantages sont contenus dans les revendications dépendantes. Le premier point d'accès radio se synchronise en réception avec le second point d'accès radio, et passe dans le mode de fonctionnement dans lequel il ne transmet pas de signal pilote.

Il n'est pas nécessaire que la couverture radio du premier point d'accès radio soit substantiellement totalement incluse dans celle du second point d'accès radio, même si ce cas de figure n'est pas exclu comme on le verra ci-dessous dans un mode de réalisation particulier.

Dans un mode de réalisation, le premier point d'accès radio quitte le mode de fonctionnement dans lequel il ne transmet pas de signal pilote suite à la réception d'un signal de requête d'accès aléatoire, par exemple transmis par un équipement utilisateur vers le second point d'accès

Dans un autre mode de réalisation, le premier point d'accès radio quitte le mode de fonctionnement dans lequel il ne transmet pas de signal pilote suite a la réception d'une requête d'établissement de connexion, laquelle requête pouvant par exemple être destinée au second point d'accès

Avantageusement, le premier point d'accès radio poursuit la procédure d'établissement de connexion avec l'équipement initiateur de la requête d'établissement.

L'équipement utilisateur initiateur de la requête d'établissement peut par ailleurs abandonner la procédure d'établissement de connexion avec le second point d'accès radio sur réception d'un message de poursuite de la procédure d'établissement de connexion envoyé par le premier point d'accès. Il peut en outre poursuivre la procédure d'établissement de connexion avec le premier point d'accès, ou initier une nouvelle procédure d'établissement de connexion avec le premier point d'accès.

Dans un mode de réalisation, l'equipement utilisateur identifie le second point d'accès radio avant de transmettre vers ce dernier un signal de requête aléatoire et/ou une requête d'établissement de connexion.

Le mode de fonctionnement en « veille » du premier point d'accès radio peut être caractérisé par l'arrêt de la transmission de signaux radio, ce qui permet de diminuer sensiblement la consommation d'énergie du premier point d'accès radio Cela permet en outre de limiter les interférences entre cellules de points d'accès radio, notamment dans une configuration ou de nombreux, points d'acces radio de type femto sont installés dans un immeuble: Dans ce cas, le mode de fonctionnement dans lequel le premier point d'accès radio ne transmet pas de signal pilote est un mode de fonctionnement dans lequel le premier point d'accès radio ne transmet aucun signal, le premier point d'accès radio étant apte à fonctionner dans ce mode.

L'invention trouve aussi a s'appliquer dans le contexte non limitatif des réseaux de radiocommunication de type cellulaire, et au cas ou le premier point d accès radio est compris dans un noeud d'accès de type résidentiel ou « femto », et le second point d'accès radio est compris dans une station de base de l'infrastructure de réseau d'accès du réseau de radiocommunication cellulaire. Elle trouve cependant à s'appliquer à tout autre type de point d'accès radio de réseaux de radiocommunication cellulaires, desservant une ou une pluralité de cellules de type micro, pico, et/ou macro. Enfin, elle trouve aussi à s'appliquer dans réseaux et points d'accès configurés de sorte que la couverture radio du premier point d'accès radio est substantiellement totalement incluse dans la couverture radio du second point d'accès. Cela peut être notamment le cas lorsque le premier point d'accès est inclus dans un noeud d'accès femto et dessert une cellule de type « femto » (c'est-à-dire de petite taille, destinée à assurer la couverture radio en contexte résidentiel), et que le deuxième point d'accès radio est inclus dans uns station de base d'un système de radiocommunication cellulaire desservant une ou plusieurs cellules de type « macro ».

Un autre aspect de l'invention se rapporte à un dispositif apte à communiquer avec une infrastructure de réseau d'accès d'un réseau de radiocommunication, comprenant des moyens de communication sur une interface radio avec un équipement utilisateur de l'infrastructure de réseau d'accès d'un réseau de radiocommunication, des moyens de gestion de mode de fonctionnement agencés pour contrôler le passage dans un mode de fonctionnement dans lequel le dispositif ne transmet pas de signal pilote, et la sortie de ce mode de fonctionnement, des moyens de synchronisation en réception avec un point d'accès radio de l'infrastructure de réseau d'accès d'un réseau de radiocommunication, la couverture radio du dispositif étant au moins partiellement incluse dans la couverture radio dudit point d'accès radio, et dans lequel lesdits moyens de gestion de mode de fonctionnement sont agencés pour faire passer le dispositif dans le mode de fonctionnement dans lequel il ne transmet pas de signal pilote après synchronisation en réception avec ledit point d'accès radio.

Dans un mode de réalisation, lesdits moyens de gestion de mode de fonctionnement sont agencés pour faire sortir le dispositif du mode de fonctionnement dans lequel il ne transmet pas de signal pilote suite à la réception d'un signal de requête d'accès aléatoire.

Dans un autre mode de réalisation, le dispositif comprend en outre des moyens de gestion d'établissement de connexion avec un équipement utilisateur, et lesdits moyens de gestion de mode de fonctionnement sont agencés pour faire sortir le dispositif du mode de fonctionnement dans lequel il ne transmet pas de signal pilote suite à la réception d'une requête d'établissement de connexion.

Lesdits moyens de gestion d'établissement de connexion avec un équipement utilisateur peuvent par ailleurs être agencés pour poursuivre la procédure d'établissement de connexion avec l'équipement initiateur de la requête d'établissement.

Ce dispositif selon l'invention peut avantageusement être intégré dans un point d'accès radio de type résidentiel ou « femto », qui peut lui-même avantageusement être intégré dans un équipement pouvant être utilisé dans un contexte résidentiel, désigné sous l'acronyme anglais CPE (« Customer Premises Equipment »).

L'invention propose enfin un programme d'ordinateur chargeable dans une mémoire associée à un processeur, et comprenant des instructions pour la mise en oeuvre d'un procédé tel que défini ci-dessus lors de l'exécution dudit programme par le processeur, ainsi qu'un support informatique sur lequel est enregistré ledit programme.

D'autres particularités et avantages de la présente invention apparaîtront dans la description ci-après d'exemples de réalisation non limitatifs, en référence aux dessins annexés, dans lesquels :
- la figure 1 montre un schéma d'architecture d'un système UMTS ;
- les figures 2a et 2b sont des diagrammes montrant les étapes de sortie du mode veille d'un point d'accès selon un premier mode de réalisation ;
- les figures 3a et 3b sont des diagrammes montrant les étapes de sortie du mode veille d'un point d'accès selon un deuxième mode de réalisation ;
- les figure 4a et 4b sont des diagrammes montrant les étapes de sortie du mode veille d'un point d'accès selon un troisième mode de réalisation ;
- La figure 5 est un schéma synoptique d'un dispositif selon l'invention.

Dans la présente description, on se place dans le cas non limitatif d'un point d'accès, de type femto, compris dans un réseau d'accès d'un réseau de radiocommunication cellulaire de type UMTS en mode FDD (« Frequency Division Duplex »).

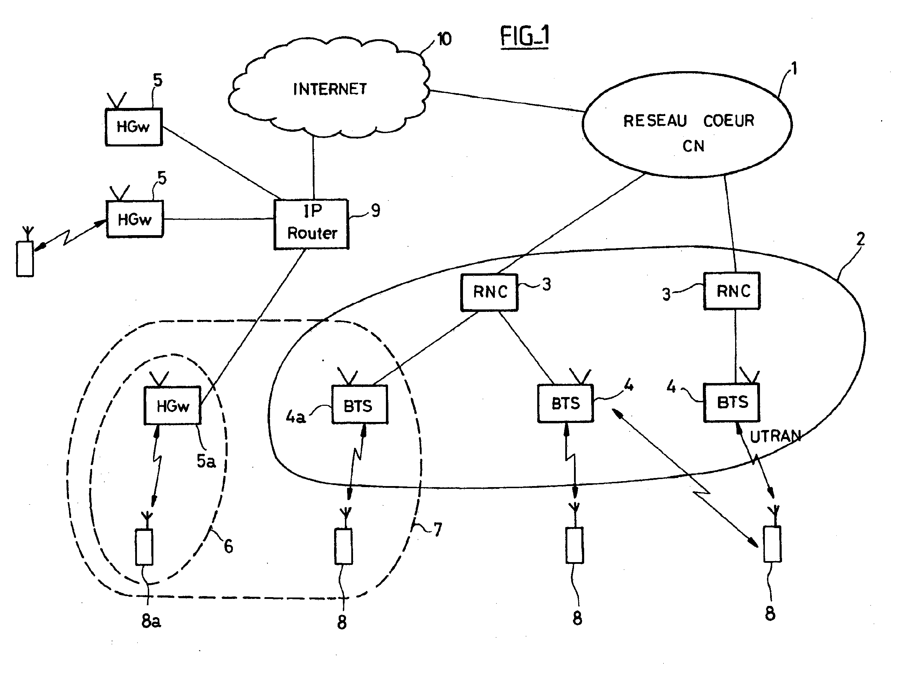

La figure 1 montre un réseau de radiocommunication cellulaire comprenant une infrastructure de réseau d'accès de type UMTS incluant des points d'accès de type femto. L'UMTS est un système de radiocommunication dont le réseau d'accès, appelé UTRAN (« UMTS Terrestrial Radio Access Network »), utilise un accès multiple à répartition par codes (CDMA, « Code Division Multiple Access »), c'est-à-dire que les symboles transmis sont multipliés par des codes d'étalement constitués d'échantillons appelés « chips » dont la cadence est supérieure à celle des symboles transmis. Les codes d'étalement distinguent différents canaux physiques PhCH (en anglais « Physical Channel ») qui sont superposés sur la même ressource de transmission constituée par une fréquence porteuse. Les propriétés d'auto- et d'inter-corrélation des codes d'étalement permettent au récepteur de séparer les PhCH et d'extraire les symboles qui lui sont destinés.

Le réseau de radiocommunication cellulaire, de type UMTS, comprend un réseau coeur (en anglais « core network », CN) 1 comprenant des commutateurs interconnectés appelés MSC pour ceux qui fournissent des services de commutation de circuits, et SGSN pour ceux qui fournissent des services de commutation de paquets. Dans le réseau d'accès radio 2, communément appelé UTRAN dans le cas de l'UMTS, des contrôleurs de réseau radio (en anglais « Radio Network Controller ») RNCs 3 sont connectés à des commutateurs du réseau coeur. Chaque RNC supervise une ou plusieurs stations de base 4, appelées Node-B, au moyen d'une interface désignée sous l'acronyme IuB dans les spécifications UMTS. Les Node-Bs sont distribuées géographiquement de manière à fournir la couverture radio souhaitée, et chaque Node-B dessert une ou plusieurs cellules radio 7 couvrant la zone où le service cellulaire est accessible au public.

Pour l'UMTS en mode FDD sur la liaison descendante (de l'UTRAN vers les UEs), un code primaire de brouillage (aussi communément appelé code de « scrambling ») est alloué à chaque station de base, et différents canaux physiques utilisés par cette station de base sont distingués par des codes de « channelisation » mutuellement orthogonaux. Pour chaque PhCH, le code d'étalement global est le produit du code de « channelisation » et du code de « scrambling » de la station de base. Les différents canaux physiques, comprenant des canaux communs et des canaux dédiés, obéissent à une structure de trame dans laquelle des trames de 10ms se succèdent sur la fréquence porteuse utilisée par la station de base. Chaque trame est subdivisée en 15 tranches temporelles (« timeslots » ou « slots ») de 666 µs chacune.

Parmi les différents canaux physiques communs dans le sens descendant se trouvent un canal pilote (CPICH, « Common Pilot Channel »), un canal de contrôle primaire (P-CCPCH, « Primary Common Control Physical Channel »), un canal de contrôle secondaire (S-CCPCH, « Secondary Common Control Physical Channel », un canal de synchronisation (SCH, « Synchronisation Channel »). Le canal de synchronisation est utilisé pour la recherche de cellule, et est constitué de deux sous-canaux : le canal SCH primaire, et le canal SCH secondaire. Le canal SCH primaire porte une information de synchronisation consistant en un code de synchronisation primaire (PSC, « Primary Synchronisation Code »), et le canal SCH secondaire porte une information de synchronisation consistant en un ensemble de codes de synchronisation secondaires (SSC, « Secondary Synchronisation Code »).

Des points d'accès femto 5 distribuées sur la zone de couverture radio des Node-Bs 4 définissent des couvertures radio de petite taille 6 qui sont, si ce n'est entièrement, quasiment entièrement incluses dans une ou plusieurs des cellules radio desservies par les Node-Bs 4. La couverture radio 6 d'un point d'accès femto 5 est assez faible, typiquement de l'ordre d'une dizaine de mètres. Le point d'accès femto 5 peut par exemple consister en un équipement indépendant, de préférence de faible encombrement, destiné à être installé en environnement résidentiel, ou aussi en un module d'accès radio embarqué au sein d'un équipement de type « gateway » comprenant en outre un décodeur de signaux de télévision, un accès WiFi, un accès Ethernet, un modem ADSL, etc Dans l'exemple non limitatif considéré, la couverture radio d'un point d'accès femto 5 du réseau d'accès radio UTRAN 2 est aussi une cellule, de petite taille, par exemple de dimension permettant de couvrir une habitation résidentielle. La cellule 6 d'un point d'accès femto, communément appelée « cellule femto », est typiquement incluse, dans sa totalité ou presque, dans une ou plusieurs cellules 7 de Node-Bs 4, communément appelées « cellule macro ».

Les BTSs 4 et points d'accès femto 5 sont aptes à communiquer sur l'interface de radiocommunication avec les stations mobiles 8, 8a, aussi appelées UEs (en anglais, « User Equipment ») conformément aux spécifications correspondantes du système UMTS. Le point d'accès femto 5 comprend pour ce faire un module de transmission radio et un module de réception radio.

Un point d'accès femto 5 comprend par ailleurs une liaison de transmission à haut-débit, utilisant par exemple une interface de type DSL, vers le réseau internet 6, par l'intermédiaire d'un routeur IP 9 Cela permet de raccorder l'ensemble du réseau de points d'accès femto 5 avec le reste de l'infrastructure UTRAN 2 et le réseau coeur 1

Chaque UE 8, 8a peut être dans plusieurs états de liaison avec l'UTRAN, gérés par un protocole de gestion des ressources radio (RRC, «Radio Resource Control») mis en oeuvre au niveau du RNC et au niveau de l'UE (voir spécification technique 3G TS 25 331, "Radio Resource Control (RRC); Protocol Specification (Release 7)", version 7.10.0 publiée en septembre 2008 par le 3GPP (3rd Generation Partnership Project), section 7) Dans certains de ces états, l'UE est en connexion active avec le système de radiocommunication, c'est-à-dire notamment qu'il peut envoyer à destination de la station de base des signaux radio relatifs à une communication en cours

Lorsque l'UE est sous tension et dans une cellule séléctionnée sans avoir de communication en cours avec l'UTRAN, il est dans un état de veille. Les processus de sélection initiale et de resélection de cellule sont décrits dans la spécification technique 3G TS 25.304, version 3.6.0 publiée en mars 2001 par le 3GPP, section 5.2. Dans cet état de veille, après avoir sélectionné une cellule, l'UE reçoit des informations système émises sur un canal de diffusion (BCH) par la station de base de la cellule sélectionnée (voir spécification technique 3G TS 25.331 précitée, section 8.1.1). Ces informations système incluent des informations de contrôle de l'accès dans le sens montant (de l'UE vers l'UTRAN), ainsi que des informations relatives à la procédure d'accès aléatoire sur la couche physique. Les informations de contrôle à diffuser sur le BCH sont portées par le canal physique P-CCPCH.

Le point d'accès femto 5 est apte à 'fonctionner dans un mode dit de veille, dans lequel il n'émet plus de signal pilote. On peut prévoir, dans un autre mode de réalisation, que le point d'accès femto 5 n'émette plus aucun signal correspondant à ses canaux physiques communs dans le sens descendant. Enfin, on peut aussi prévoir que le module de transmission radio du point d'accès femto 5 soit totalement inactif lorsque le point d'accès est en mode veille, de sorte qu'il ne transmet alors, plus aucun signal, et notamment plus de signal pilote. Dans ces trois cas de figure, un UE 8 qui se trouve sous la couverture de la cellule macro 6 du Node-B 4a et de la cellule femto du point d'accès femto 5a ne pourra effectuer un accès au réseau UTRAN 2 par le biais du point d'accès femto 5. Il pourra par contre effectuer un accès au réseau UTRAN 2 grâce aux informations reçues sur les signaux transmis par le Node-B 4a, parmi lesquels les signaux de synchronisation.

Le point d'accès femto 5 comprend en outre un module de gestion du mode de fonctionnement, qui détermine le passage vers le mode de fonctionnement veille, et la sortie de ce mode. Avant de passer en mode veille, le point d'accès femto 5a se synchronise en réception sur le Node-B 4a, qui est l'un des Node-Bs qui dessert une cellule macro 7 sous la couverture de laquelle se trouve le point d'accès femto 5a. Cette synchronization en réception comprend l'acquisition de paramètres de réception du Node-B 4a, de manière à permettre au point d'accès femto 5a d'intercepter toute requête d'accès effectuée par un équipement utilisateur se trouvant sous sa couverture radio 6 à destination du Node-B 4a. Dans le cadre de la présente description basée sur l'exemple non limitatif d'un réseau UMTS, cette synchronisation peut être réalisée conformément à la procédure en 3 phases mise en oeuvre par un équipement utilisateur lors de sa mise sous tension pour rechercher une cellule initiale. Dans une première phase, le point d'accès femto 5a utilise les propriétés du canal SCH primaire de la cellule 7 pour se synchroniser au niveau slot. Dans une deuxième phase, le point d'accès femto 5a utilise les propriétés du canal SCH secondaire de la cellule 7 pour se synchroniser au niveau trame, et dans une troisième phase le point d'accès femto 5a utilise les propriétés du canal CPICH de la cellule 7 pour en déduire son code primaire de brouillage.

Le point d'accès femto 5a utilise ce code primaire de brouillage pour accéder aux informations systèmes diffusées sur le canal P-CCPCH de la cellule 7 et notamment à la structure des canaux communs qu'un équipement utilisateur doit utiliser lors de l'établissement d'appel.

Pour initialiser une communication, ou plus généralement pour transmettre des informations à l'UTRAN en mode veille, l'UE 8a émet à destination de la station de base sélectionnée un signal de requête d'accès aléatoire sur un canal commun appelé PRACH («Physical Random Access Channel»).

Cette procédure d'accès aléatoire est exécutée par la couche physique (voir spécification technique 3G TS 25.214, version 5.4.0, section 6, sous le contrôle de la couche de contrôle d'accès au médium MAC (voir spécification technique 3G TS 25.321, version 7.10.0, publiée en septembre 2008 par le 3GPP, section 11.2) et de la couche RRC.

Ainsi, lorsque l'UE 8a souhaite engager une communication, ou plus généralement pour transmettre des informations à l'UTRAN 2, il effectue un accès aléatoire vers l'UTRAN 2, qui est reçu par le Node-B 4a. Sur réception d'une autorisation d'accès, il transmet au Node-B 4a une requête d'établissement de connexion conformément aux spécifications du protocole UMTS de, contrôle des ressources radio RRC. Cette requête d'établissement de connexion est portée par un message (message RRC-CNX-REQ(macro_id)) du protocole RRC dont les caractéristiques sont décrites dans la spécification technique 3G TS 25.331 précitée.

Lorsque l'UE 8a est sous la couverture radio du point d'accès femto 5a, du fait que le point d'accès femto 5a s'est synchronisé en réception avec le Node-B 4a avant de passer en mode veille, le point d'accès femto 5a peut intercepter la requête d'acces aléatoire envoyée par l'UE 8a vers l'UTRAN 2, et notamment le message de requête d'établissement de connexion RRC RRC-CNX-REQ(macro_id) envoyé par l'UE 8a, et est à même d'y réagir

Dans un premier mode de réalisation, te point d'accès femto 5a quitte le mode veille dès lors qu'il intercepte un accès aléatoire de l'UE 8a transmis vers l'UTRAN 2. La sortie du mode veille peut être effectuée dès l'interception d'un signal de requête d'accès aléatoire, ou bien sur interception d'un message de requête d'établissement de connexion, chacun provenant d'un équipement utilisateur situé sous sa couverture radio. Ces deux cas de figure constituent des exemples de messages reçus par le point d'accès femto 5a, et déclenchant sa sortie du mode veille, et donc interprétés comme des messages de « reveil » La sortie du mode veille comprendra la repnse de transmission des signaux/canaux dont la transmission avait été interrompue lors du passage en mode veille. Il peut s'agir de la reprise des transmissions par le module radio du point d'accès femto ou bien, dans l'autre cas de figure décrit ci-dessus, de la reprise de la transmission du canal pilote, ou de l'ensemble des signaux correspondants à ses canaux physiques communs dans le sens descendant.

Dans une variante, le point d'accès femto 5a ne quitte le mode veille qu'après avoir vérifié que l'UE 8a a l'origine d'un tel message de réveil est un des équipements utilisateur appartenant à un ensemble prédefini d'équipements utilisateur autorisés pour ce point d'accès femto 5a.

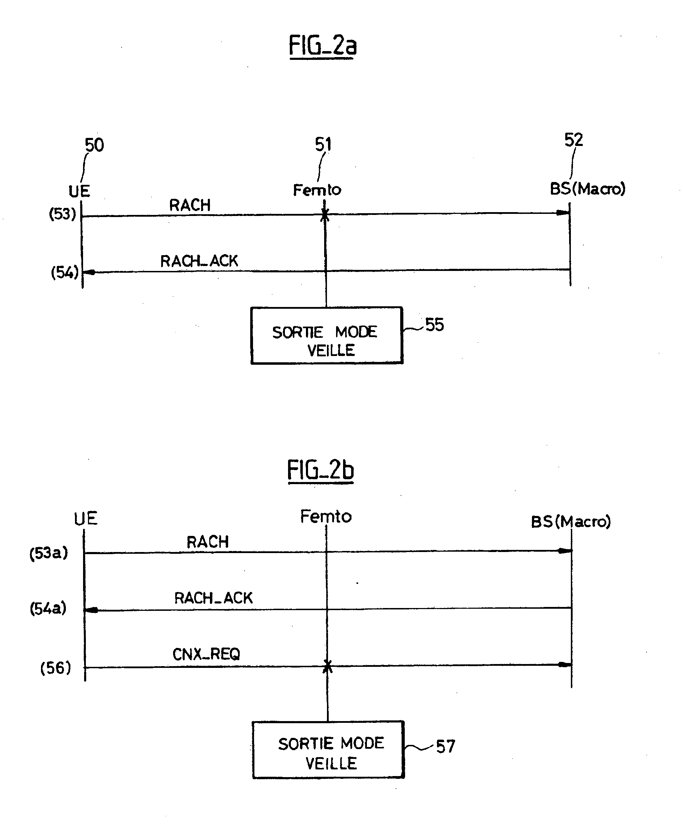

La figure 2a illustre différentes étapes du procédé de sortie du mode veille selon ce premier mode de réalisation. L'équipement utilisateur 50 envoie un signal de requête d'accès aléatoire (RACH) vers la station de base 52 desservant la cellule macro sous la couverture de laquelle il se trouve Ce signal de requête d'accès aléatoire, initialement transmis vers la station de base 52, est intercepté par le point d'accès femto 51 bien que celui-ci soit en mode veille On notera que le point d'accès femto 51 s'est synchronisé en reception avec la station de base 52 avant de passer en mode veille. Sur interception du signal de requête d'accès aléatoire initialement transmis vers la station de base 52, le point d'accès femto 51 sort du mode veille (55).

La figure 2b illustre une variante du procédé décrit ci-dessus, dans laquelle le point d'accès femto ne sort du mode veille (57) qu'après interception d'un message de requête d'ouverture de connexion (56).

Dans un deuxième mode de réalisation, le point d'accès femto 5a répond à la requête d'accès de l'UE 8a vers le Node-B 4a. Dans l'exemple choisi pour la présente description qui est celui d'un système UMTS, la réponse du point d'accès femto 5a peut par exemple comprendre l'envoi par ledit point d'accès femto 5a d'un message de réponse à la requête d'établissement de connexion RRC conformément aux spécifications du protocole RRC. Ce message RRC de réponse, de type CNX-RESP, contient, à l'instar du message de requête de connexion RRC, un identifiant de cellule, qui peut être en l'occurrence l'identifiant de cellule de la cellule macro 7 correspondant au Node-B 4a, ou bien l'identifiant de cellule de la cellule femto 6 correspondant au point d'accès femto 5a.

Dans le cas où l'UE 8a reçoit la réponse à sa requête d'accès provenant du point d'accès femto 5a avant celle provenant du Node-B 4a, il peut ignorer la réponse provenant du Node-B 4a lui parvenant après celle du point d'accès femto 5a. Dans cette situation, l'UE 8a fonctionne dans un mode appelé « compressed mode », dans lequel il écoute les informations provenant de la cellule femto du point d'accès femto 5a, ainsi que celles provenant de la cellule macro du Node-B 4a. Le « compressed mode » est décrit dans la spécification 25.212 (voir spécification technique 3GPP TS 25.212, « Multiplexing and channel coding (FDD) (Release 7) », version 7.9.0, publiée en septembre 2008 par le 3GPP, section 4.4.

A l'inverse, dans le cas où l'UE 8a reçoit la réponse à sa requête d'accès provenant du point d'accès femto 5a après celle du Node-B 4a, il peut ignorer la réponse provenant du point d'accès femto 5a lui parvenant après celle du Node-B 4a.

Dans ces deux cas de figure, le point d'accès femto 5a est sorti du mode veille après avoir reçu la requête d'établissement de connexion que l'UE 8a avait initialement transmis vers le Node-B 4a.

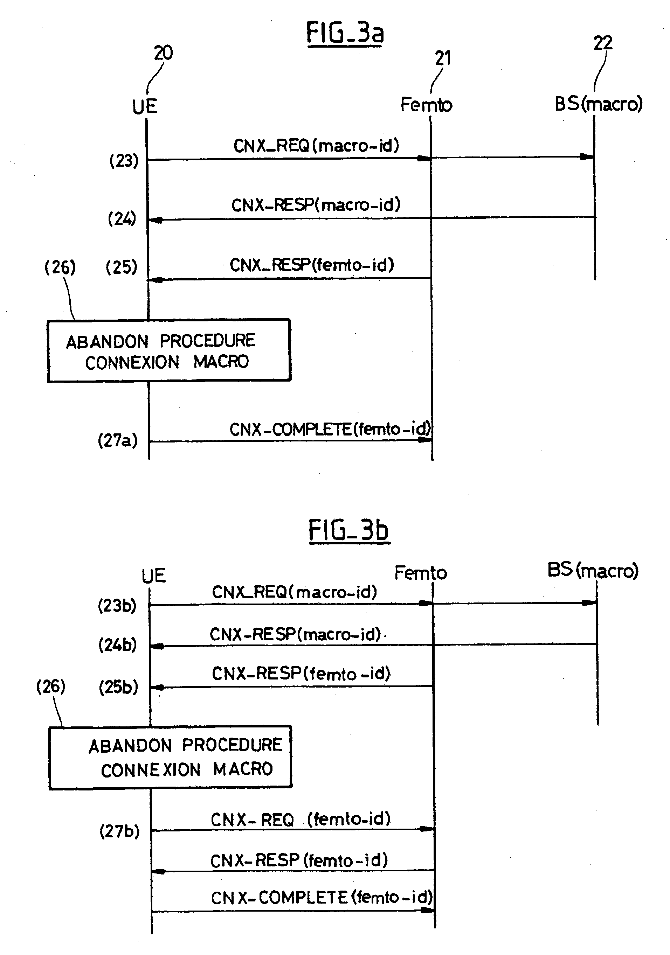

La figure 3a illustre différentes étapes du procédé de sortie du mode veille selon ce deuxième mode de réalisation L'équipement utilisateur 20 envoie un message de requête d'ouverture de connexion contenant entre autres un identifiant de la cellule macro sous la couverture de laquelle il se trouve (il peut aussi s'agir d'un identifiant de station de base 22 desservant cette cellule) CNX_REQ(macro_id) 23. Ce message de requête d'ouverture de connexion, initialement destiné a la station de base 22, est intercepte par le point d'accès femto 21 bien que celui-ci soit en mode veille. On notera que le point d'accès femto 21 s'est synchronisé en réception avec la station de base 22 avant de passer en mode veille. A l'étape 24, la station de base 22 envoie une réponse au message de requête d'ouverture de connexion envoyé à l'étape 23. Ce message de réponse CNX_RESP(macro_id) contient entre autres un identifiant de cellule ou de la station de base 22 A l'étape 25, le point d'accès femto 21 station de base 24 envoie une réponse au message de requête d'ouverture de connexion envoyé à l'étape 23 Ce message de réponse CNX_RESP(femto_id) contient entre autres un identifiant de cellule femto ou du point d'accès femto 21 Des lors que l'équipement utilisateur 20 a reçu une réponse du point d'accès femto, il peut choisir d'abandonner la procédure d'établissement de connexion avec la station de base 22 en ne poursuivant pas l'envoi de messages relatifs a cette procédure, étape qui est illustrée sur la figure 3a (26). L'équipement utilisateur 20 poursuit cependant la procédure d'établissement de connexion initialement engagée avec la station de base 22, non pas avec cette dernière, mais avec le point d'accès femto 21 A l'étape 27, il envoie ainsi un message CNX_COMPLETE(femto_id) d'établissement de connexion au point d'accès femto 21, message qui contient non plus un identifiant relatif à la station de base 22 ou l'une des cellules macro que celle-ci dessert, mais un identifiant relatif au point d'accès femto 21, pour confirmer l'établissement d'une connexion avec le point d'accès femto 21.

Dans une variante, illustrée sur la figure 3b, l'équipement utilisateur 20 ne poursuit pas la procédure d'etablissement de connexion initialement engagée avec la station de base 22, mais initie une nouvelle procédure d'établissement de connexion avec le point d'accès femto 21. A l'étape 27b, il envoie ainsi un message CNX_REQ (femto_id) de requête d établissement de connexion au point d'accès femto 21 Ce message engage une procédure d'établissement de connexion avec le point d'accès femto une fois que l'équipement utilisateur est informé de la sortie du mode veille du point d'accès femto 21 par le biais de la réception du message (25b) de réponse à sa requête initiale (23b) de connexion avec la station de base 22

On notera par ailleurs que le délai de réception de la réponse de la station de base 22 au message initial de requête d'établissement de connexion 23, voire même la non-réception d'une réponse de la station de base 22 n'a pas de conséquence sur la suite de la procédure d'écrite dès lors que l'équipement utilisateur 20 a reçu une réponse à son message initialement adressé à la station de base 22 Cette réponse l'informe que le point d'accès femto 21, s'il était en mode veille lorsque l'équipement utilisateur 20 a envoyé son message de requête d'établissement de connexion 23, a quitté ce mode veille.

Dans un troisième mode de réalisation, on considère un ensemble d'UEs, noté {UEᵢ}, qui sont associés au point d'accès femto 5a Il peut s'agir, par exemple, des équipements utilisateurs d'un ensemble d'utilisateurs habilités du point d'accès femto 5a, c'est-à-dire seuls autorisés à utiliser le point d'accès femto 5a. Cette autorisation peut être permanente, ou bien temporaire, pour servir des besoins ponctuels. Les équipements utilisateurs {UEᵢ} disposent d'un identifiant du point d'accès femto 5a et d'un identifiant de la cellule macro 7 desservie par le Node-B 4a, sous la couverture de laquelle se trouve le point d'accès femto 5a Par exemple, dans le cas d'une utilisation résidentielle dans laquelle un utilisateur a acheté ou loué pour sa résidence le point d'accès femto 5a, son équipement utilisateur UEₖ 8a dispose d'un identifiant du point d'accès femto 5a (*Id_Femto_5a*) et de la cellule macro 7 desservie pas le Node-B 4a (*Id_Cell_Macro_NodeB4a*).

L'équipement utilisateur UEₖ 8a exploite les données reçues sur le canal pilote diffusé par la station de base sous la couverture radio de laquelle il se trouve, parmi lesquelles l'identifiant de cellule macro, pour comparer l'identifiant de cellule diffusé avec l'identifiant de « sa » cellule macro 7 *(Id_Cell_Macro_NodeB4a*).

Lorsqu'il reconnaît que la cellule macro sous la couverture de laquelle il se trouve est « sa » cellule macro, c'est-à-dire la cellule macro 7 sous la couverture de laquelle se trouve le point d'accès femto 5a auquel il est associé, et qu'il ne reçoit pas le signal pilote dudit point d'accès femto 5a, il peut envoyer un signal de requête d'accès aléatoire, éventuellement suivi d'un message de requête d'établissement de connexion si l'accès aléatoire est autorisé, vers le Node-B 4a desservant « sa » cellule macro 7. Ce ou ce message, s'il est intercepté par le point d'accès femto 5a, fera fonction pour ce dernier de message de requête de sortie du mode veille conformément au procédé décrit ci-dessus dans ses différentes variantes.

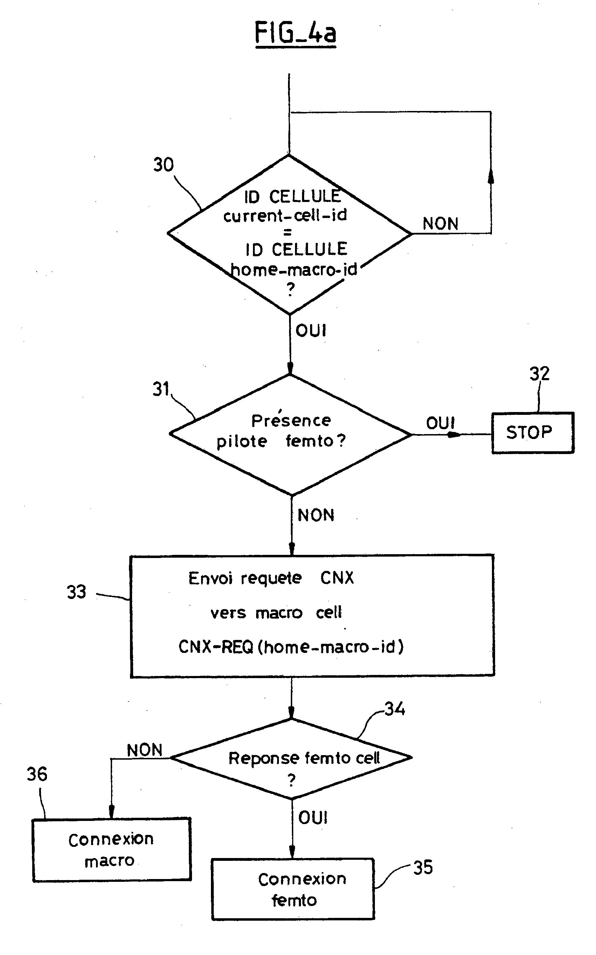

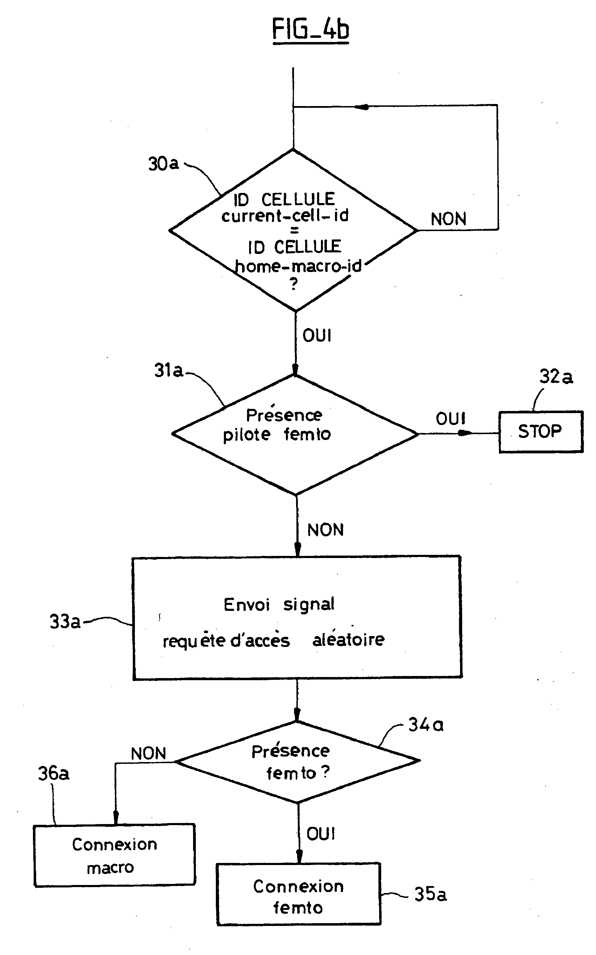

Cette procédure est illustrée par la figure 4. Dans une première étape 30, l'équipement utilisateur effectue un test afin de savoir si la cellule macro sous la couverture de laquelle il se trouve est effectivement « sa » cellule macro. Ce test peut comprendre une comparaison de l'identifiant de cellule macro sous la couverture de laquelle il se trouve « current_cell_id » avec l'identifiant de cellule de « sa » cellule macro « home_macro_id ». L'étape suivante 31 est effectuée si le test précédent est positif, c'est-à-dire si l'équipement utilisateur a reconnu qu'il se trouvait sous la couverture radio de « sa » cellule macro. Dans le cas contraire le test précédent est répété, par exemple de manière périodique. A l'étape 31, l'équipement utilisateur teste la présence du signal pilote de « son » point d'accès femto. S'il reçoit le signal pilote de ce dernier, cela signifie qu'il n'est pas en veille. Dans ce cas il n'y a pas lieu de poursuivre la procédure de sortie de veille du point d'accès femto (étape 32). Dans le cas contraire, l'équipement utilisateur peut être sous la couverture de son point d'accès femto qui est en mode veille, ou bien être hors de la couverture radio de son point d'accès femto, qui peut ou non être en mode veille. A l'étape 33, il envoie un message de requête d'établissement de connexion vers « sa » cellule macro. Il teste ensuite à l'étape 34 la réception ou non de « son » point d'accès femto. En cas de réponse de ce dernier (étape 35), l'équipement utilisateur peut effectuer l'établissement d'une connexion avec son point d'accès femto, par exemple selon l'une des procédures décrites ci-dessus. En cas de non-réponse du point d'accès femto (étape 36), l'équipement utilisateur peut poursuivre sa procédure d'établissement de connexion avec « sa » cellule macro.

A l'étape 33, l'équipement utilisateur UEₖ peut aussi, en variante, transmettre une requête d'établissement de connexion vers « son » point d'accès femto, et non pas vers le Node-B desservant « sa » cellule macro

La figure 4b illustre une variante du procédé décrit ci-dessus, dans laquelle les étapes 30a, 31 a et 32a sont identiques aux étapes 30, 31 et 32 A l'étape 33a, l'équipement utilisateur transmet un signal de requête d'accès aléatoire vers « sa » cellule macro Il teste ensuite à l'étape 34a la présence ou non de « son » point d'accès femto. Si ce dernier est sorti du mode veille, il transmet l'ensemble des signaux de contrôle parmi lesquels son signal de synchronisation et son signal pilote permettant ainsi a l'équipement utilisateur de détecter qu'il n'est pas en mode veille. Dans ce cas (étape 35a), l'équipement utilisateur peut effectuer l'établissement d'une connexion avec son point d'accès femto, par exemple selon l'une des procédures décrites ci-dessus En cas de non-réponse du point d'accès femto (étape 36a), l'équipement utilisateur peut engager une procédure d'établissement de connexion avec « sa » cellule macro

On notera que la procédure d'écrite ci-dessus d'identification par l'equipement utilisateur de la cellule macro sous la couverture radio de laquelle il se trouve, afin de determiner si cette cellule macro correspond à une cellule predeterminée peut avantageusement comporter en outre une procédure d'authentification de cette cellule prédéterminée, sans pour autant sortir du cadre de la présente invention.

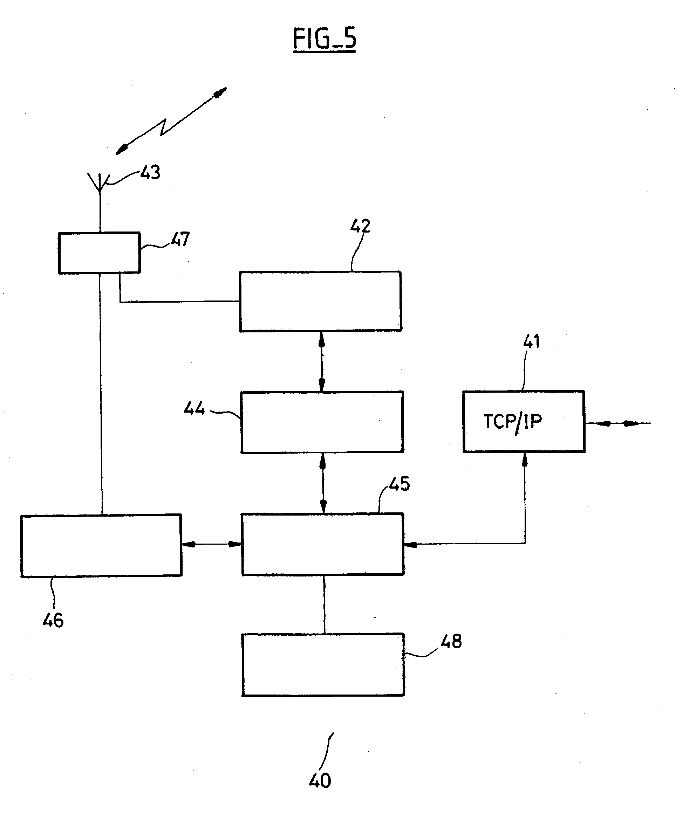

La figure 5 illustre schematiquement un exemple de réalisation d'un dispositif selon l'invention. Le dispositif 40 comprend une interface réseau (TCP/IP) 41 par l'intermediaire de laquelle il communique avec une infrastructure de réseau d'accès d'un réseau de radiocommunication, un module radio 42 et un module de traitement 44 Le contrôleur 45 supervise les opérations du dispositif 40, et en particulier les opérations des modules radio 42 et de traitement 44, ainsi que les échanges de données sur l'interface externe 41. Le module radio 42 est par ailleurs connecte a des moyens antenne 43 par l'intermédiaire d'un duplexeur 47 pour les communications avec des équipements utilisateurs (UE) sur l'interface air Le module radio 42 comporte un étage radio qui reçoit les signaux radio captes par l'antenne 43, et les transpose a plus basse fréquence Les signaux reçus sont ensuite transmis à un module de réception (non représenté sur la figure) du module radio 42, pour être traités (filtrage de remise en forme et conversion analogique-numérique) d'une manière connue en soi. Le module 44, connecté au module radio 42, traite les informations décodées des canaux de diffusion d'un point d'accès radio d'infrastructure de réseau d'accès d'un réseau de radiocommunication, ce qui permet d'effectuer la Synchronisation en réception du dispositif 40 avec un point d'accès radio de ladite infrastructure.

Le dispositif 40 comprend par ailleurs un module 46 de transmission de signaux radio par l'intermédiaire du duplexeur 47 et des moyens antenne 43. Le contrôleur supervise les opérations de ce module de transmission 46. Un module 48 de gestion du mode veille supervise quant à lui le passage vers le mode veille et la sortie dudit mode. Lorsque le processus de passage en mode veille est enclenché, le module 48 commande, par le biais du contrôleur 45, les modules 42 et 44 pour que le dispositif 40 se synchronise en réception avec un point d'accès radio de l'infrastructure de réseau d'accès d'un réseau de radiocommunicaiton. Une fois la synchronisation en réception effectuée, le module 48 commande, par le biais du contrôleur 45. le module de transmission 46 pour interrompre la transmission du signal pilote, ou bien encore pour interrompre le fonctionnement de ce module et stopper, au moins temporairement, toute transmission.

## Revendications

1. Procédé de gestion du fonctionnement d'un point d'accès radio (5, 5a) d'une infrastructure de réseau d'accès (2) d'un réseau de radiocommunication, l'infrastructure de réseau d'accès (2) comprenant des premier et second point d'accès radio (4, 4a, 5, 5a) à l'infrastructure de réseau d'accès aptes à communiquer sur une interface radio (42) avec un équipement utilisateur (8, 8a), dans lequel la couverture radio du premier point d'accès radio (5, 5a) est au moins partiellement incluse dans la couverture radio du second point d'accès radio (4, 4a), et dans lequel le premier point d'accès radio (5, 5a) est apte à fonctionner dans un mode de fonctionnement dans lequel il ne transmet pas de signal pilote, le procédé comprenant les étapes suivantes :
- le premier point d'accès radio (5, 5a) se synchronise en réception avec le second point d'accès radio (4, 4a) ;
- le premier point d'accès radio (5, 5a) passe dans le mode de
fonctionnement dans lequel il ne transmet pas de signal pilote ;
**caractérisé en ce que** le premier point d'accès radio (5, 5a) quitte le mode de fonctionnement dans lequel il ne transmet pas de signal pilote suite à la réception d'un signal de requête d'accès aléatoire transmis par l'équipement utilisateur (8) vers le second point d'accès (4, 4a) ou d'une requête d'établissement de connexion destinée au second point d'accès (4, 4a).

2. Procédé selon la revendication 1, dans lequel le premier point d'accès radio (4, 4a) poursuit la procédure d'établissement de connexion avec l'équipement initiateur (8) de la requête d'établissement.

3. Procédé selon la revendication 2, dans lequel l'équipement utilisateur initiateur (8) de la requête d'établissement abandonne la procédure d'établissement de connexion avec le second point d'accès radio (4, 4a) sur réception d'un message de poursuite de la procédure d'établissement de connexion envoyé par le premier point d'accès (5, 5a).

4. Procédé selon l'une quelconque des revendications 2 ou 3, dans lequel l'équipement initiateur (8) de la requête d'établissement poursuit la procédure d'établissement de connexion avec le premier point d'accès (5, 5a).

5. Procédé selon l'une quelconque des revendications 2 ou 3, dans lequel l'équipement initiateur (8) de la requête d'établissement initie une nouvelle procédure d'établissement de connexion avec le premier point d'accès (5, 5a).

6. Procédé selon l'une quelconque des revendications précédentes, dans lequel l'équipement utilisateur (8) identifie le second point d'accès radio (4, 4a) avant de transmettre vers ce dernier un signal de requête aléatoire et/ou une requête d'établissement de connexion.

7. Procédé selon l'une quelconque des revendications précédentes, dans lequel le mode de fonctionnement dans lequel le premier point d'accès radio (5, 5a) ne transmet pas de signal pilote est un mode de fonctionnement dans lequel le premier point d'accès radio (5, 5a) ne transmet aucun signal, le premier point d'accès radio (5, 5a) étant apte à fonctionner dans ce mode.

8. Procédé selon l'une quelconque des revendications précédentes, dans lequel le réseau de radiocommunication est de type cellulaire, et dans lequel le premier point d'accès radio (5, 5a) est compris dans un noeud d'accès de type résidentiel ou « femto », et le second point d'accès radio (4, 4a) est compris dans une station de base de l'infrastructure de réseau d'accès du réseau de radiocommunication cellulaire.

9. Procédé selon l'une quelconque des revendications précédentes, dans lequel la couverture radio du premier point d'accès radio (5, 5a) est substantiellement totalement incluse dans la couverture radio du second point d'accès (4, 4a).

10. Dispositif (40) apte à communiquer avec une infrastructure de réseau d'accès d'un réseau de radiocommunication, comprenant :
- des moyens de communication sur une interface radio (42) avec un équipement utilisateur (8) de l'infrastructure de réseau d'accès d'un réseau de radiocommunication,
- des moyens de gestion de mode de fonctionnement (48) agencés pour contrôler le passage dans un mode de fonctionnement dans lequel le dispositif (40) ne transmet pas de signal pilote, et la sortie de ce mode de fonctionnement ;
- des moyens de synchronisation (48) en réception avec un point d'accès radio (4, 4a) de l'infrastructure de réseau d'accès d'un réseau de radiocommunication, la couverture radio du dispositif (40) étant au moins partiellement incluse dans la couverture radio du point d'accès radio (4, 4a) ;
et dans lequel lesdits moyens de gestion de mode de fonctionnement (48) sont agencés pour faire passer le dispositif (40) dans le mode de fonctionnement dans lequel il ne transmet pas de signal pilote après synchronisation en réception avec ledit point d'accès radio (4, 4a), **caractérisé en ce que** lesdits moyens de gestion de mode de fonctionnement (48) sont agencés pour faire sortir le dispositif (40) du mode de fonctionnement dans lequel il ne transmet pas de signal pilote suite à la réception d'un signal de requête d'accès aléatoire transmis par l'équipement utilisateur (8) vers le second point d'accès (4, 4a) ou d'une requête d'établissement de connexion destinée au second point d'accès (4, 4a).

11. Dispositif (40) selon la revendication 10, dans lequel lesdits moyens de gestion d'établissement de connexion (45) avec un équipement utilisateur (8) sont agencés pour poursuivre la procédure d'établissement de connexion avec l'équipement initiateur (8) de la requête d'établissement.

12. Point d'accès radio (5, 5a) de type résidentiel ou « femto » comprenant un dispositif (40) selon l'une quelconque des revendications 10 ou 11.

13. Equipement CPE Customer Premises Equipment, comprenant un point d'accès radio (5, 5a) selon la revendication 12.

14. Programme d'ordinateur, chargeable dans une mémoire associée à un processeur, et comprenant des instructions pour la mise en oeuvre d'un procédé selon l'une quelconque des revendications 1 à 9 lors de l'exécution dudit programme par le processeur.

15. Support informatique sur lequel est enregistré un programme selon la revendication 14.

## Patentansprüche

1. Verfahren zur Verwaltung des Betriebs eines Funkzugangspunktes (5, 5a) der Infrastruktur eines Zugangsnetzwerks (2) eines Funkkommunikationsnetzwerks, wobei die Infrastruktur des Zugangsnetzwerks (2) einen ersten und einen zweiten Funkzugangspunkt (4, 4a, 5, 5a) zur Infrastruktur des Zugangsnetzwerks umfasst, welche fähig sind, auf einer Funkschnittstelle (42) mit einem Benutzerendgerät (8, 8a) zu kommunizieren, wobei die Funkabdeckung des ersten Funkzugangspunktes (5, 5a) zumindest teilweise in der Funkabdeckung des zweiten Funkzugangspunktes (4, 4a) inbegriffen ist, und wobei der erste Funkzugangspunkt (5, 5a) fähig ist, in einem Betriebsmodus zu arbeiten, in welchem er kein Pilotsignal überträgt, wobei das Verfahren die folgenden Schritte umfasst:
- Der erste Funkzugangspunkt (5, 5a) wird durch Empfangen mit dem zweiten Funkzugangspunkt (4, 4a) synchronisiert;
- der erste Funkzugangspunkt (5, 5a) geht in den Betriebsmodus über, in welchem
er kein Pilotsignal überträgt;
**dadurch gekennzeichnet, dass** der erste Funkzugangspunkt (5, 5a) den Betriebsmodus, in welchem er kein Pilotsignal überträgt, nach Empfang eines von dem Benutzerendgerät (8) an den zweiten Zugangspunkt (4, 4a) übertragenen Direktzugriff-Anforderungssignals oder einer für den zweiten Zugangspunkt (4, 4a) bestimmten Anforderung für den Aufbau einer Verbindung verlässt.

2. Verfahren nach Anspruch 1, wobei der erste Funkzugangspunkt (4, 4a) die Verbindungsaufbauprozedur mit dem Gerät (8), welches die Aufbauanforderung initiiert hat, fortsetzt.

3. Verfahren nach Anspruch 2, wobei das Benutzerendgerät (8), welches die Aufbauanforderung initiiert hat, die Verbindungsaufbauprozedur mit dem zweiten Funkzugangspunkt (4, 4a) nach Empfang einer von dem ersten Zugangspunkt (5, 5a) gesendeten Nachricht über die Fortsetzung der Verbindungsaufbauprozedur abbricht.

4. Verfahren nach einem beliebigen der Ansprüche 2 oder 3, wobei das Gerät (8), welches die Aufbauanforderung initiiert hat, die Verbindungsaufbauprozedur mit dem ersten Zugangspunkt (5, 5a) fortsetzt.

5. Verfahren nach einem beliebigen der Ansprüche 2 oder 3, wobei das Gerät (8), welches die Aufbauanforderung initiiert hat, eine neue Verbindungsaufbauprozedur mit dem ersten Zugangspunkt (5, 5a) initiiert.

6. Verfahren nach einem beliebigen der vorstehenden Ansprüche, wobei das Benutzerendgerät (8) den zweiten Funkzugangspunkt (4, 4a) identifiziert, bevor es ein Direktzugriff-Anforderungssignal und/oder eine Verbindungsaufbauanforderung an diesen sendet.

7. Verfahren nach einem beliebigen der vorstehenden Ansprüche, wobei der Betriebsmodus, in welchem der erste Funkzugangspunkt (5, 5a) kein Pilotsignal überträgt, ein Betriebsmodus ist, in welchem der erste Funkzugangspunkt (5, 5a) gar kein Signal überträgt, wobei der erste Funkzugangspunkt (5, 5a) fähig ist, in diesem Modus zu arbeiten.

8. Verfahren nach einem beliebigen der vorstehenden Ansprüche, wobei das Funkkommunikationsnetzwerk vom zellularen Typ ist, und wobei der erste Funkzugangspunkt (5, 5a) in einem Zugangsknoten vom stationären oder "Femto"-Typ enthalten ist, und der zweite Funkzugangspunkt (4, 4a) in einer Basisstation der Infrastruktur des Zugangsnetzwerks des zellularen Funkkommunikationsnetzwerk enthalten ist.

9. Verfahren nach einem beliebigen der vorstehenden Ansprüche, wobei die Funkabdeckung des ersten Funkzugangspunktes (5, 5a) im Wesentlichen vollständig in der Funkabdeckung des zweiten Zugangspunktes (4, 4a) inbegriffen ist.

10. Vorrichtung (40), welche fähig ist, mit der Infrastruktur eines Zugangsnetzwerks eines Funkkommunikationsnetzwerks zu kommunizieren, umfassend:
- Mittel zur Kommunikation auf einer Funkschnittstelle (42) mit einem Benutzerendgerät (8) der Infrastruktur des Zugangsnetzwerks eines Funkkommunikationsnetzwerks,
- Mittel zur Verwaltung des Betriebsmodus (48), ausgelegt für die Steuerung des Übergangs in einen Betriebsmodus, in welchem die Vorrichtung (40) kein Pilotsignal überträgt, und des Verlassens dieses Betriebsmodus;
- Mittel zur Synchronisation (48) durch Empfangen, mit einem Funkzugangspunkt (4, 4a) der Infrastruktur des Zugangsnetzwerks eines Funkkommunikationsnetzwerks, wobei die Funkabdeckung der Vorrichtung (40) zumindest teilweise in der Funkabdeckung des Funkzugangspunktes (4, 4a) inbegriffen ist;
und wobei die besagten Mittel zur Verwaltung des Betriebsmodus (48) dazu ausgelegt sind, zu bewirken, dass die Vorrichtung (40) nach der Synchronisation für den Empfang mit dem besagten Funkzugangspunkt (4, 4a) in den Betriebsmodus, in welchem sie kein Pilotsignal überträgt, übergeht, **dadurch gekennzeichnet, dass** die besagten Mittel zur Verwaltung des Betriebsmodus (48) dazu ausgelegt sind, zu bewirken, dass die Vorrichtung (40) den Betriebsmodus, in welchem sie kein Pilotsignal überträgt, nach Empfang eines von dem Benutzerendgerät (8) an den zweiten Zugangspunkt (4, 4a) übertragenen Direktzugriff-Anforderungssignals oder einer für den zweiten Zugangspunkt (4, 4a) bestimmten Verbindungsaufbauanforderung zu verlassen.

11. Vorrichtung (40) nach Anspruch 10, wobei die besagten Mittel zur Verwaltung des Aufbaus einer Verbindung (45) mit einem Benutzerendgerät (8) dazu ausgelegt sind, die Verbindungsaufbauprozedur mit dem Gerät (8), welches die Aufbauanforderung initiiert hat, fortzusetzen.

12. Funkzugangspunkt (5, 5a) vom stationären oder "Femto"-Typ, umfassend eine Vorrichtung (40) gemäß einem beliebigen der Ansprüche 10 oder 11.

13. Customer Premises Equipment bzw. CPE-Teilnehmerendgerät, umfassend einen Funkzugangspunkt (5, 5a) gemäß Anspruch 12.

14. Computerprogramm, welches in einen mit einem Prozessor assoziierten Speicher geladen werden kann und Befehle für das Durchführen eines Verfahrens gemäß einem beliebigen der Ansprüche 1 bis 9 umfasst, wenn das besagte Programm von dem Prozessor ausgeführt wird.

15. Datenträger, auf welchem ein Programm gemäß Anspruch 14 gespeichert ist.

## Claims

1. A method for managing the operation of a radio access point (5, 5a) of a network access infrastructure of a radio communication network (2), the access network infrastructure (2) comprising first and second radio access points (4, 4a, 5, 5a) to the access network infrastructure capable of communicating over a radio interface (42) with a user equipment (8, 8a) wherein the radio coverage of the first radio access point (5, 5a) is at least partially included within the radio coverage of the second radio access point (4, 4a) and wherein the first radio access point (5, 5a) is capable of operating in an operating mode in which it does not transmit a pilot signal, the method comprising the following steps:
- the first radio access point (5, 5a) synchronizes by reception with the second radio access point (4, 4a);
- the first radio access point (5, 5a) switches into the operating mode in which it does not transmit a pilot signal;
**characterized in that** the first radio access point (5, 5a) leaves the operating mode in which it does not transmit a pilot signal following the receipt of a random access request signal transmitted by the user equipment (8) to the second access point (4, 4a) or a connection establishment request intended for the second access point (4, 4a).

2. A method according to claim 1, wherein the first radio access point (4, 4a) continues the connection establishment procedure with the equipment initiating (8) the establishment request.

3. A method according to claim 2, wherein the user equipment initiating (8) the establishment request abandons the connection establishment procedure with the second radio access point (4, 4a) upon receiving a message to continue the connection establishment procedure sent by the first access point (5, 5a).

4. A method according to any one of the claims 2 or 3, wherein the equipment intiating (8) the establishment request continues the connection establishment procedure with the first access point (5, 5a).

5. A method according to any one of the claims 2 or 3, wherein the equipment initiating (8) the establishment request initiates a new connection establishment procedure with the first access point (5, 5a).

6. A method according to any one of the preceding claims, wherein the user equipment (8) identifies the second radio access point (4, 4a) before transmitting to that access point a random request signal and/or a connection establishment request.

7. A method according to any one of the preceding claims, wherein the operating mode in which the first radio access point (5, 5a) does not transmit a pilot signal is an operating mode in which the first radio access point (5, 5a) does not transmit any signal, the first radio access point (5, 5a) being capable of operating in that mode.

8. A method according to any one of the preceding claims, wherein the radio communication network is of the cellular type, and wherein the first radio access point (5, 5a) is comprised within a residential or "femto" access node, and the second radio access point (4, 4a) is comprised within a base station of the access network infrastructure of the cellular radio communication network.

9. A method according to any one of the preceding claims, wherein the radio coverage of the first radio access point is substantially fully included in the radio coverage of the second access point (4, 4a).

10. A device (40) capable of communicating with an access network infrastructure of a radio communication network, comprising:
- means for communicating on a radio interface (42) with a user equipment (8) of the access network infrastructure of a radio communication network,
- means of managing the operating mode (48) operative to control the switch-over into an operating mode in which the device (40) does not transmit a pilot signal, and the act of exiting that operating mode;
- means of synchronization (48) by reception with a radio access point (4, 4a) of the network access infrastructure of a radio communication network, the radio coverage of the device (40) being at least partially included in the radio coverage of the radio access point (4, 4a);
and wherein said means of managing the operating mode (48) are operative to switch the device (40) into an operating mode wherein it does not transmit a pilot signal after synchronization during reception with said radio access point (4, 4a) **characterized in that** said means of managing the operating mode (48) are arranged to take the device (40) out of the operating mode in which it does not transmit a pilot signal following the receipt of a random access request signal transmitted by the user equipment (8) to the second access point (4, 4a) or a connection establishment request intended for the second access point (4, 4a).

11. A device (40) according to claim 10, wherein said means of managing connection establishment (45) with a user equipment (8) are operative to continue the connection establishment procedure the equipment initiating (8) the establishment request.

12. A radio access point (5, 5a) of the residential or "femto" point comprising a device (40) according to any one of the claims 10 or 11.

13. A Customer Premises Equipment comprising a radio access point (5, 5a) according to claim 12.

14. A computer program that can be loaded in a memory associated with a processor, and comprising instructions for the implementation of a method according to any one of the claims 1 to 9 during the execution of said program by the processor.

15. A data-processing medium on which is recorded a program according to claim 14.
